# EUROPEAN PATENT APPLICATION

(11) **EP 4 072 043 A1**
(43) Date of publication of application: **12.10.2022**
(21) Application number: 20898499.7
(22) Date of filing: 11.12.2020
(51) Int. Cl.: H04J 3/16

(54) **FLEXIBLE ETHERNET OVERHEAD MULTIFRAME RECEIVING METHOD, APPARATUS, DEVICE, AND MEDIUM**

(30) Priority: 12.12.2019 CN 201911292275
(71) Applicant: ZTE Corporation, Shenzhen, Guangdong 518057 (CN)
(72) Inventor: CHEN, Lei, Shenzhen, Guangdong 518057 (CN)
(74) Representative: Raynor, Simon Mark
(86) International application number: PCT/CN2020/135916
(87) International publication number: WO 2021/115452

(57) **Abstract**

The present disclosure provides a method for receiving multiframe for Flexible Ethernet (FlexE) overheads, an apparatus, a device, and a medium. The method includes: receiving a first overheads frame in multiframe for FlexE overheads sent by a peer device; performing a check on a field of FlexE group number of the first overheads frame, the field of FlexE group number includes: an interface capability flag, a slicing packet network (SPN) inner group number, and a check code; and in response to the check being passed, receiving overheads frames other than the first overheads frame in the multiframe for the FlexE overheads.

## Description

### CROSS REFERENCE TO RELATED APPLICATIONS

This application claims priority to Chinese Patent Application No. 201911292275.6 filed on December 12, 2019, which is hereby incorporated by reference in its entirety.

### TECHNIC FIELD

The present disclosure relates to radio communication network, and more specifically to a method and an apparatus for receiving multiframe for Flexible Ethernet (FlexE) overheads, a device, and a medium.

### BACKGROUND

FlexE technology separates a service logic layer from a physical layer, and supports binding of physical layers (PHY) of multiple interfaces with a FlexE group to transmit large-traffic Ethernet services. In this way, high-rate, sub-rate, and channelization functions at a logical layer can be implemented. Time slot information of different FlexE clients is transmitted by FlexE overheads of a multiframe structure. An overheads block is inserted, at a fixed interval, on each FlexE PHY, and 8 overheads blocks constitute a complete FlexE overheads frame. The international standardization optical internetworking forum (OIF) defines the most basic low-level layer interface between devices for the FlexE technology. On this basis, a slicing packet network (SPN) technology makes further expansion, and realizes a time-slotted processing of IEEE 802.3 50G and above (such as 100G, 200G, etc.) at a slicing channel layer, and further provides low-latency, hard-isolated slicing channels for a multi-service bearer.

However, FlexE interfaces according to SPN standard follows a FlexE interface standard defined by the OIF. In a network environment where the SPN FlexE interface and the OIF FlexE interface coexist, capability differences of different interfaces cannot be detected during transmission of overheads frames, resulting in that management and planning of a service network are inflexible, and that reliability of transmission and processing of overheads frames is poor.

### SUMMARY

The present disclosure provides a method and an apparatus for receiving multiframe for FlexE overheads, a device and a medium.

In some embodiments, a method for receiving multiframe for FlexE overheads is provided. The method includes: receiving a first overheads frame in multiframe for FlexE overheads sent by a peer device; performing a check on a field of FlexE group number of the first overheads frame, where the field of FlexE group number includes: an interface capability flag, a SPN inner group number, and a check code; and in response to the check being passed, receiving overheads frames other than the first overheads frame in the multiframe for the FlexE overheads.

In some embodiments, an apparatus for receiving multiframe for FlexE overheads is further provided. The apparatus includes: a first receiving module, configured to receive a first overheads frame in multiframe for FlexE overheads sent by a peer device; a check module, configured to perform a check on a field of FlexE group number of the first overheads frame, where the field of FlexE group number includes: an interface capability flag, a SPN inner group number, and a check code; and a second receiving module, configured to receive, in response to the check being passed, overheads frames other than the first overheads frame in the multiframe for the FlexE overheads.

In some embodiments, a device is further provided. The device includes: one or more processors, and a memory for storing one or more programs that, when executed by the one or more processors, causes the one or more processors to perform operations of the above-mentioned method for receiving multiframe for FlexE overheads.

In some embodiments, a computer-readable storage medium is further provided. The computer-readable storage medium stores a computer program that, when executed by a processor, causes the processor to perform operations of the above-mentioned method for receiving multiframe for FlexE overheads.

### BRIEF DESCRIPTION OF THE DRAWINGS

FIG. 1 is a flowchart of a method for receiving multiframe for FlexE overheads according to an embodiment;
FIG. 2 is a schematic diagram of a first overheads frame according to an embodiment;
FIG. 3 is a flowchart of a method for receiving multiframe for FlexE overheads according to another embodiment;
FIG. 4 is a schematic diagram of interconnection of SPN FlexE interfaces of a same type according to an embodiment;
FIG. 5 is a schematic diagram of an overheads negotiation process, according to an embodiment, in a scenario where SPN FlexE interfaces of a same type are interconnected;
FIG. 6 is a schematic diagram of interconnection of a SPN FlexE interface and an OIF FlexE interface according to an embodiment;
FIG. 7 is a schematic diagram of an overheads negotiation process, according to an embodiment, in a scenario where a SPN FlexE interface and an OIF FlexE interface are interconnected;
FIG. 8 is a structural schematic diagram of an apparatus for receiving multiframe for FlexE overheads according to an embodiment;
FIG. 9 is a structural schematic diagram of hardware of a device according to an embodiment.

### DETAILED DESCRIPTION OF THE EMBODIMENTS

The present disclosure will be described below with reference to the accompanying drawings and embodiments. It should be understood that the specific embodiments described herein are only used to explain the present disclosure, but not to limit the present disclosure. It should be noted that, the embodiments in the present disclosure and the features in the embodiments may be arbitrarily combined with each other as long as there is no conflict. In addition, it should be noted that, for convenience of description, the accompanying drawings only show some but not all structures related to the present disclosure.

FlexE is an advanced Ethernet technology developed based on conventional Ethernet. FlexE may be defined as a variable rate interface between a router and an optical transport network (OTN), which simplifies mapping and transmission of Ethernet interfaces on OTN. Based on rate binding technology and flexible mapping between Ethernet interfaces and OTN, FlexE can achieve a greater transmission rate and transmission bandwidth. FlexE introduces a FlexE group on the basis of conventional Ethernet, and the FlexE group may be formed by a plurality of PHYs. FlexE clients represent Ethernet streams based on physical addresses. FlexE shim represents a shim for mapping or reflecting the FlexE clients and the FlexE group.

In FlexE, time slot information of different FlexE clients is transmitted by FlexE overheads of a multiframe structure. The method for receiving multiframe for FlexE overheads according to this embodiment can implement detection and distinguishing of a FlexE interface in OIF standard and a FlexE interface in SPN standard in the network, and can completely receive the multiframe for the FlexE overheads in response to a check on interface capability being passed. In this way, flexibility and reliability of transmission and processing of overheads frames can be improved.

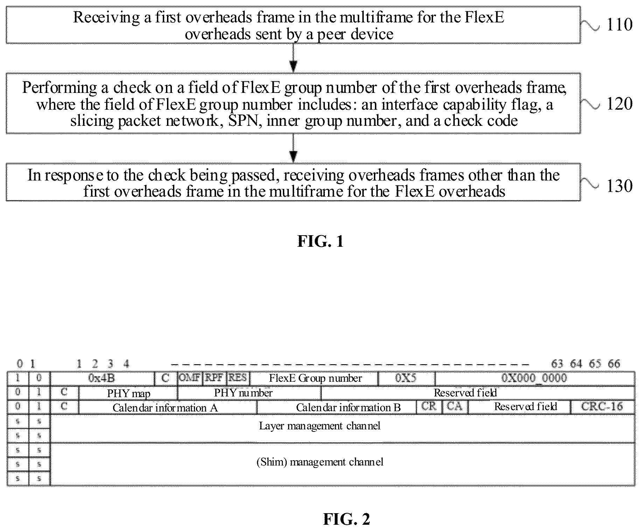

FIG. 1 is a flowchart of a method for receiving multiframe for FlexE overheads according to an embodiment. As shown in FIG. 1, the method provided by this embodiment includes operations 110-130.

In operation 110, a first overheads frame in the multiframe for the FlexE overheads sent by a peer device is received.

In operation 120, a check on a field of FlexE group number of the first overheads frame is performed, where the field of FlexE group number includes: an interface capability flag, a SPN inner group number, and a check code.

In operation 130, overheads frames other than the first overheads frame in the multiframe for the FlexE overheads are received in response to the check being passed.

In this embodiment, for the first overheads frame in the multiframe for overheads, the field of FlexE group number defined by the OIF is set to include three parts. A first part is used for an interface capability flag for distinguishing capabilities of FlexE interfaces of a local device. For example, a value of 0b'0000 represents a FlexE standard interface, and a value of 0b'011 represents an extended FlexE interface with SPN capability. The interface capability flag can be modified, and can automatically switch when a user modifies the interface capability of the FlexE group. A second part is used for the SPN inner group number for distinguishing the actual FlexE groups in SPN, the SPN inner group number can be configured by the user, and has a value ranging from 0 to 4095. For forwarding devices in the SPN, each of the devices supports up to 4096 FlexE groups. A third part is used for the check code, which is used to check validity of a formatted SPN FlexE group, the check code may include a cyclic redundancy check (CRC) code, a parity check code or the like. Data content involved in calculation of the check code includes the interface capability flag and the SPN inner group number.

As a receiving end, the local device first receives the first overheads frame in a process of receiving the multiframe for overheads sent by the peer device (sending end), and performs a check on the field of FlexE group number in the first overheads frame. In response to the interface capability supported by the peer device being the same as that of the local device, the SPN inner group numbers being matched, and the check code being calculated to be correct, subsequent overheads frames are received and parsed. By detecting and distinguishing the FlexE interfaces in OIF standard and the FlexE interfaces in SPN standard, the multiframe for the FlexE overheads can be completely received when the check on the interface capability is passed. In this way, flexibility and reliability of transmission and processing of the overheads frames can be improve.

FIG. 2 is a schematic diagram of a first overheads frame according to an embodiment. In FlexE, the time slot information of different FlexE clients is transmitted by the FlexE overheads of the multiframe structure. On each of the FlexE PHYs, an overheads block is inserted at a fixed interval of 20^{∗}1023 66-bit data blocks, and 8 overheads blocks form a complete FlexE overheads frame. The FlexE overheads block is a 66-bit code block carrying special content. The overheads block plays a role of positioning in an entire service flow. Once the overheads block is located, a position of the first time slot and positions of all subsequent time slots are determined. As shown in FIG. 2, a block flag is located in first 2 columns, a block flag of the first overheads block is 10, and the block flag of next 7 overheads blocks is 01 or SS (SS means that the content is uncertain); next 64 columns correspond to block content, for example, 0×4B (8 bits, 4B in hexadecimal), C bit (1 bit, indicating adjustment control), OMF bit (1 bit, representing an indication for an overheads frame or multiframe), RPF bit (1 bit, representing a remote PHY fault indication), RES bit (1 bit, synchronization configuration), FlexE group number (20 bits, representing a number of a member group), 0x5 (4 bits, 5 in hexadecimal), etc. Herein, 0x4B and 0x5 are flag indications of a first overheads block. In a process of receiving, when 0x4B and 0x5 are found in corresponding positions in a overheads block, it means that this overheads block is the first overheads block in the overheads frame, and forms, together with subsequent 7 consecutive overheads blocks, an overheads frame.

In an embodiment, performing the check on the field of FlexE group number of the first overheads frame includes: in response to the field of FlexE group number of the first overheads frame complying with a predetermined generation rule, the SPN inner group number and a preset group number of the local device are compared; and in response to the SPN inner group number matching the preset group number of the local device, it is determined that the check is passed, where the predetermined generation rule includes that: the interface capability flag is a first flag and the check code is a corresponding value of the field of FlexE group number when the field of FlexE group number is correctly transmitted. In this embodiment, after the first overheads frame is received and locked, the field of FlexE group number is parsed from the FlexE overheads frame extracted from the PHY, and a check is performed on the field of FlexE group number. The check is passed when the interface capability flag is a first flag, the SPN inner group number matches the preset group number of the local device and a correct transmission of the field of FlexE group number can be determined based on the check code. A check process may include following operations. Firstly, whether the field of FlexE group number complies with a predetermined generation rule of the field of SPN group number is checked. In other words, it is determined whether the interface capability flag is the first flag (representing that a SPN capability is supported), and the specific data in the field of FlexE group number is checked based on the check code, to determine whether the specific data in the field of FlexE group number is correctly transmitted and whether there is an error in the transmission process. In response to the received field of FlexE group number complies with the predetermined generation rule of the field of SPN group number, it is further determined whether the SPN inner group number matches an expected SPN inner group number of the FlexE group of the local device. In response to the SPN inner group number matching the expected SPN inner group number of the FlexE group of the local device, subsequent FlexE overheads frames are negotiated (received and parsed) sequentially according to a FlexE standard definition of the OIF, and the parsed FlexE group information is stored.

In an embodiment, after receiving all the overheads frames in the multiframe for the FlexE overheads sent by the peer device, transmitted client service data is demultiplexed according to calendar information carried by each of the overheads frames.

In this embodiment, 32 FlexE overheads frames form the multiframe for the FlexE overheads, and the local device receives the 32 FlexE overheads frames completely when the check is passed, and then successfully enters a multiframe lock state. In this case, a demultiplexing of a service data stream from the sending end in the FlexE shim may be performed according to the calendar information carried in the multiframe for overheads.

In an embodiment, the method further includes: in response to the interface capability flag being the first flag and the SPN inner group number not matching the preset group number of the local device, reporting a first alarm information, where the first alarm information includes alarm information indicating that the SPN inner group number of the peer device does not match the preset group number of the local device; and setting a remote physical layer fault flag of the first overheads frame in the multiframe for the FlexE overheads sent by the local device to the peer device to 1.

In this embodiment, when the received field of FlexE group number complies with the generation rule of the field of SPN group number, but the SPN inner group number does not match an expected SPN inner group number of the FlexE Group of the local device, the first alarm information, i.e. group number mismatch information, is reported according to the FlexE standard definition of the OIF, and the remote physical layer fault flag (RPF) of the first FlexE overheads frame sent by the Flexe Group of the local device is set to 1, to indicate that the peer device is abnormal and the SPN inner group numbers do not match.

In an embodiment, the method further includes: in response to the interface capability flag being a second flag, establishment of a FlexE shim connection with the peer device is denied; a second alarm information is reported, where the second alarm information includes alarm information indicating that an interface capability of the peer device does not match that of the local device; the remote physical layer fault flag of the first overheads frame in the multiframe for the FlexE overheads sent by the local device to the peer device is set to 1.

In this embodiment, when the received field of FlexE group number does not comply with the generation rule for the field of SPN group number, or the interface capability of the local device do not match the interface capability flag of the peer device (for example, the local device has an SPN standard interface but the peer device has an OIF standard interface), the connection of the FlexE shim is denied, and the second alarm information is generated to indicate that the FlexE interface capabilities do not match, and the RPF of the first overheads frame in the FlexE sent by the local device is set to 1, to indicate that the remote device is abnormal. When there is a fault interconnection of the FlexE interfaces, alarm information of a mismatch of FlexE interface capabilities is actively reported, which is convenient for operation and maintenance personnel to quickly troubleshoot the fault.

In an embodiment, the method further includes: transferring management information is exchanged with the peer device through a management channel.

In this embodiment, when the capabilities of the local device and the FlexE Group of the peer device do not match, service information such as calendar and PHY map is not parsed and saved, thereby the local device is unable to correctly receive the FlexE shim's client data, but retains an ability to receive and process management information. The management channel is used to transfer management information between the local device and the peer device.

In an embodiment, before receiving the first overheads frame in the multiframe for the FlexE overheads sent by the peer device, the method further includes: the interface capability flag and the SPN inner group number is generated, respectively, according to a capability type supported by an interface of a local device and planning information of internal group number, and the check code is calculated; and the interface capability flag, the SPN inner group number, and the check code are written into the field of FlexE group number of the first overheads frame in the multiframe for the FlexE overheads sent to the peer device.

In this embodiment, after the device is powered on, a checksum is automatically calculated according to the capabilities actually supported by the interfaces and to a planned SPN inner group number, and the capabilities, the planned SPN inner group number and the checksum are spliced into the SPN group number, and the SPN group number is written into the field of FlexE group number of the first overheads frame in the multiframe for overheads for sending.

In an embodiment, the interface capability flag includes the first flag and the second flag, and the first flag corresponds to the SPN capability; and the check code includes a cyclic redundancy check code or a parity check code.

In this embodiment, the check code is used to check whether the field of FlexE group number is correctly transmitted. Taking the cyclic redundancy check code as an example, at the sending end, the interface capability flag and the SPN inner group number are written into a first part and a second part of the field of FlexE group number of the first overheads frame, and then the check code uniquely corresponding to the interface capability flag and the SPN inner group number is calculated according to a preset rule or formula, and the check code is written into a third part of the field of FlexE group number. After receiving the first FlexE overheads frame, the receiving end performs the same calculation on the data in the first two parts of the field of FlexE group number according to the same rules or formulas. When the calculated value is consistent with the check code in the third part, the overheads frame is transmitted correctly. When the value calculated by the receiving end is inconsistent with the check codes sent by the sending end, there is an error in the data transmission process, and the receiving end may request the sending end to resend the overheads frame.

For example, each field of the SPN group number is set as follows.

For the field for interface capability flag, a total of 4 bits (from bit0 to bit3) are allocated, and 0 is used to represent the OIF FlexE interface, and 1 is used to represent the FlexE interface supporting the SPN capability.

For the field for SPN inner group number, a total of 12 bits (from bit4 to bit15) are allocated, and a maximum of 4096 FlexE groups can be supported in the SPN.

For the field for check code, a total of 4 bits (from bit16 to bit19) are allocated, the check code of the SPN group number may be calculated using a CRC-4 algorithm, and an initial value of the CRC is agreed to be 0.

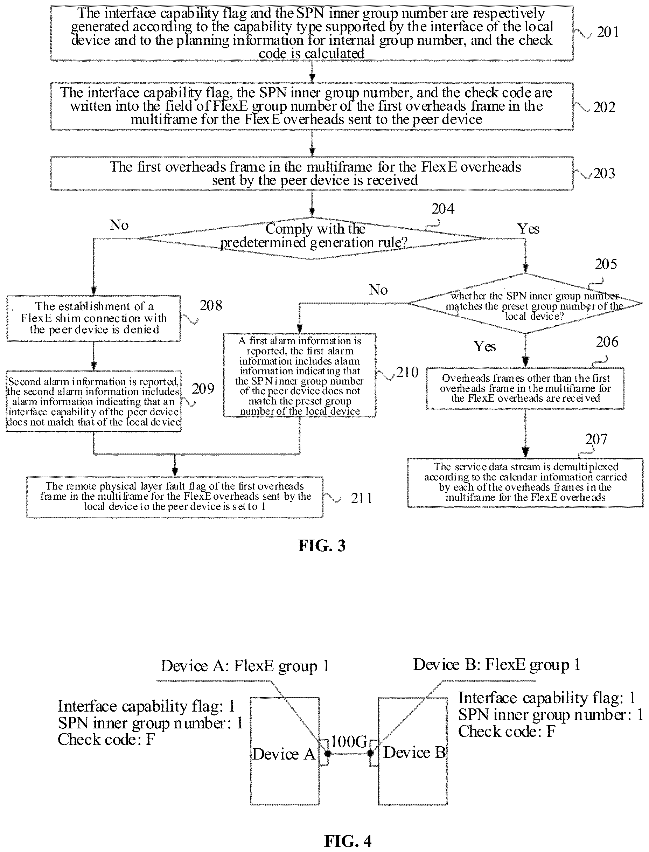

FIG. 3 is a flowchart of a method for receiving the multiframe for the FlexE overheads according to another embodiment. As shown in FIG. 3, the method includes operations 201-211.

In operation 201, the interface capability flag and the SPN inner group number are respectively generated according to the capability type supported by the interface of the local device and to the planning information for internal group number, and the check code is calculated.

In operation 202, the interface capability flag, the SPN inner group number, and the check code are written into the field of FlexE group number of the first overheads frame in the multiframe for the FlexE overheads sent to the peer device.

In operation 203, the first overheads frame in the multiframe for the FlexE overheads sent by the peer device is received.

In operation 204, it is determined whether the field of FlexE group number of the first overheads frame complies with the predetermined generation rule. In response to the field of FlexE group number of the first overheads frame complying with the predetermined generation rule, operation 205 is performed; in response to the field of FlexE group number of the first overheads frame not complying with the predetermined generation rule, operation 208 is performed.

In operation 205, it is determined whether the SPN inner group number matches the preset group number of the local device. In response to the SPN inner group number matching the preset group number of the local device, operation 206 is performed; in response to the SPN inner group number not matching the preset group number of the local device, operation 210 is performed.

In operation 206, overheads frames other than the first overheads frame in the multiframe for the FlexE overheads are received.

In operation 207, the service data stream is demultiplexed according to the calendar information carried by each of the overheads frames in the multiframe for the FlexE overheads.

In operation 208, the establishment of a FlexE shim connection with the peer device is denied.

In operation 209, second alarm information is reported, where the second alarm information includes alarm information indicating that an interface capability of the peer device does not match that of the local device. Then operation 211 is performed.

In operation 210, a first alarm information is reported, where the first alarm information includes alarm information indicating that the SPN inner group number of the peer device does not match the preset group number of the local device.

In operation 211, the remote physical layer fault flag of the first overheads frame in the multiframe for the FlexE overheads sent by the local device to the peer device is set to 1.

FIG. 4 is a schematic diagram of interconnection of SPN FlexE interfaces of a same type according to an embodiment. As shown in FIG. 4, device A (sending end) and device B (receiving end) are two transmission devices that supports SPN. The devices are interconnected through a FlexE group (100G PHY). The capability of FlexE group of device A is configured as SPN (the value thereof is 0b0001), the SPN inner group number is configured as 1, and the polynomial calculated using CRC-4 is X4+X+1, and then an automatically generated CRC-4 is 0b1111. Configuration of the capability of the FlexE Group of device B is the same as that of device A.

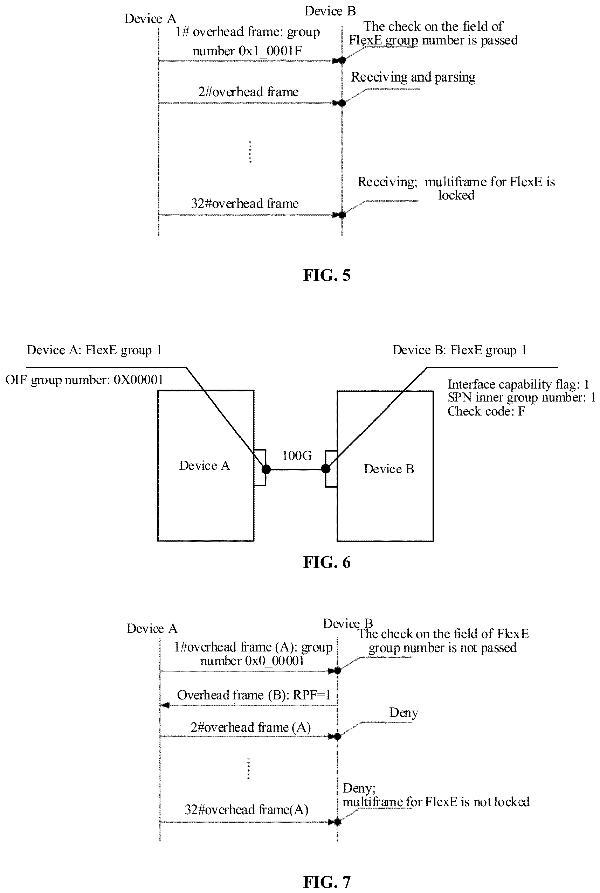

FIG. 5 is a schematic diagram of an overheads negotiation process, according to an embodiment, in a scenario where SPN FlexE interfaces of a same type are interconnected. As shown in FIG. 5, after receiving the first FlexE overheads frame sent by device A, device B parses and checks whether the field of FlexE group number complies with the generation rule of the field of SPN group number. For example, when 0x1_001F sent by device A complies with the generation rule and the SPN inner group number matches that of device B, and the check on the field of FlexE group number of the first overheads frame performed by device B is passed, device B receives and parses subsequent overheads frames, and stores parsed FlexE group information until the 32 FlexE overheads frames are received completely to form multiframe for FlexE overheads and successfully enter the multiframe lock state. According to the calendar information carried in the multiframe for overheads, device B performs the demultiplexing of the service data stream from device A in the FlexE shim.

FIG. 6 is a schematic diagram of interconnection of a SPN FlexE interface and an OIF FlexE interface according to an embodiment. As shown in FIG. 6, device A and device B are two transmission devices in a SPN network, and the two devices are interconnected through a FlexE Group (100G PHY). The FlexE group on a side of device A only supports an OIF FlexE capability, while the FlexE group on a side of device B has a SPN FlexE capability. The value of the field of FlexE group number configured on device A is 0x1_0001 while the value of the field of FlexE group number on device B is generated according to the generation rule of the field of SPN group number, which is 0x1_001F.

FIG. 7 is a schematic diagram of an overheads negotiation process, according to an embodiment, in a scenario where a SPN FlexE interface and an OIF FlexE interface are interconnected. As shown in FIG. 7, after receiving the first FlexE overheads frame sent by device A, device B parses and checks whether the field of FlexE group number complies with the generation rule of the field of SPN group number. The 0x0_0001 sent by device A does not comply with the generation rule, thus the check on the field of FlexE group number performed by device B is not passed, and an alarm of FlexE interface capabilities mismatch is generated, and the RPF flag of the overheads frame sent by a FlexE group of the local device is set to 1. The FlexE group of device B may receive subsequent FlexE overheads frames, but does not parse and save service information such as calendar and PHY map due to a state of interface capabilities mismatch. That is, device B is unable to correctly receive client data of a FlexE group shim, but is able to receive and process management information through the management channel.

In the method for receiving the multiframe for the FlexE overheads according to this embodiment, a check is performed to determine whether the first overheads frame complies with the defined generation rule and whether the SPN inner group number matches the expected group number of the local device, and then the service data stream is demultiplexed correctly according to the calendar information or alarm information is generated in time to report faults. In this way, the FlexE interfaces in OIF standard and the FlexE interfaces in SPN standard in the network can be detected and distinguished, thereby flexibility and reliability of transmission and processing of overheads frame can be improved.

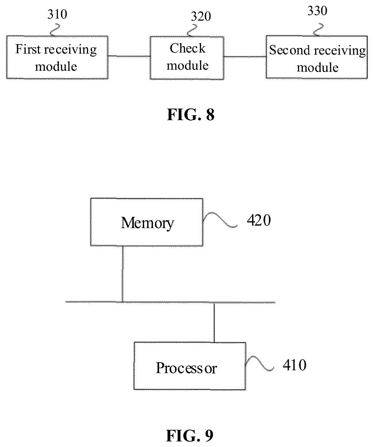

Some embodiments of the present disclosure further provide an apparatus for receiving multiframe for FlexE overheads. FIG. 8 is a structural schematic diagram of an apparatus for receiving multiframe for FlexE overheads according to an embodiment. As shown in FIG. 8, the apparatus for receiving the multiframe for the FlexE overheads includes: a first receiving module 310, a check module 320 and a second receiving module 330.

The first receiving module 310 is configured to receive a first overheads frame in the multiframe for the FlexE overheads sent by a peer device.

The check module 320 is configured to perform a check on a field of FlexE group number of the first overheads frame, where the field of FlexE group number includes: an interface capability flag, a SPN inner group number, and a check code.

The second receiving module 330 is configured to receive overheads frames other than the first overheads frame in the multiframe for the FlexE overheads when the check is passed.

In the apparatus for receiving the multiframe for the FlexE overheads according to this embodiment, the check module performs a check on the field of FlexE group number of the first overheads frame, and the complete multiframe for overheads is received when the check is passed. In this way, detection and distinguishing of the FlexE interfaces in OIF standard and the FlexE interface in SPN standard in the network can be realized. Moreover, the complete multiframe for the FlexE overheads is received when the check on the interface capability is passed, in this way, flexibility and reliability of transmission and processing of the overheads frame can be improved.

In an embodiment, the check module 320 is specifically configured to:

in response to the field of FlexE group number of the first overheads frame complying with a predetermined generation rule, compare the SPN inner group number with a preset group number of the local device; and in response to the SPN inner group number matching the preset group number of the local device, determine that the check is passed. Herein, the predetermined generation rule includes that: the interface capability flag is a first flag and the check code is a corresponding value of the field of FlexE group number when the field of FlexE group number is correctly transmitted.

In an embodiment, the apparatus further includes a demultiplexing module.

The demultiplexing module is configured to demultiplex a service data stream according to calendar information carried by each of the overheads frames in the multiframe for the FlexE overheads.

In an embodiment, the apparatus further includes a first alarm module.

The first alarm module is configured to report a first alarm information when the interface capability flag is the first flag and the SPN inner group number does not match the preset group number of the local device. The first alarm information includes alarm information indicating that the SPN inner group number of the peer device does not match the preset group number of the local device.

In an embodiment, the apparatus further includes a connection module and a second alarm module.

The connection module is configured to deny establishment of a FlexE shim connection with the peer device when the interface capability flag is the second flag.

The second alarm module is configured to report a second alarm information, where the second alarm information includes alarm information indicating that the interface capability of the peer device does not match that of the local device.

In an embodiment, the apparatus further includes a flag setting module.

The flag setting module is configured to set a remote physical layer fault flag of the first overheads frame in the multiframe for the FlexE overheads sent by the local device to the peer device to 1.

In an embodiment, the apparatus further includes a management module.

The management module is configured to exchange management information with the peer device through a management channel.

In an embodiment, the apparatus further includes a field generation module and a writing module.

The field generation module is configured to, before receiving the first overheads frame in the multiframe for the FlexE overheads sent by the peer device, generate interface capability flag and the SPN inner group number, respectively, according to a capability type supported by an interface of a local device and planning information of the internal group number, and calculate the check code.

The writing module is configured to write the interface capability flag, the SPN inner group number and the check code into the field of FlexE group number of the first overheads frame in the multiframe for the FlexE overheads sent to the peer device.

In an embodiment, the interface capability flag includes a first flag and a second flag, and the first flag corresponds to a SPN capability.

The check code includes a cyclic redundancy check code or a parity check code.

The apparatus for receiving the multiframe for the FlexE overheads proposed according to this embodiment and the method for receiving the multiframe for the FlexE overheads proposed in the above embodiments belong to the same inventive concept. For technical details not described in detail in this embodiment, reference may be made to any of the above embodiments. And this embodiment has the same beneficial effect as implementing the method for receiving the multiframe for the FlexE overheads.

Some embodiments of the present disclosure also provide a device. The method for receiving multiframe for FlexE overheads may be performed by the apparatus for receiving the multiframe for the FlexE overheads. The apparatus for receiving the multiframe for the FlexE overheads may be implemented by software and/or hardware and be integrated in the device. The device is a network device that performs communication and data transmission based on the FlexE. For example, the device may be a network element, a server, a terminal, or the like.

FIG. 9 is a structural schematic diagram of hardware of a device according to an embodiment. As shown in FIG. 9, the device provided in this embodiment includes: a processor 410 and a memory 420. The device may have one or more processors. Taking the device having one processor 410 as an example in FIG. 9, the processor 410 and the memory 420 in the device may be connected by a bus or in other ways. As an example, the processor 410 and the memory 420 in the device are connected by the bus in FIG. 9.

One or more programs are executed by the one or more processors 410, so that the one or more processors perform operations of the method for receiving the multiframe for the FlexE overheads described in any of the foregoing embodiments.

The memory 420 in the device, as a computer-readable storage medium, may be configured to store the one or more programs, and the programs may be software programs, computer-executable programs, and modules, such as program instructions/modules corresponding to the method for receiving the multiframe for the FlexE overheads in the embodiments of the present disclosure (for example, the modules in the apparatus for receiving the multiframe for the FlexE overheads shown in FIG. 8 including: a first receiving module 310, a check module 320 and a second receiving module 330). The processor 410 executes various functional applications and data processing of the device by running the software programs, instructions and modules stored in the memory 420, that is, performs operations of the method for receiving the multiframe for the FlexE overheads in the above method embodiments.

The memory 420 mainly includes a program storage section and a data storage section. Herein, the program storage section may store an operating system and an application program required for at least one function. The data storage section may store data created according to use of the device and the like (for example, field of FlexE group number, calendar information, etc., as described in the above embodiments). Additionally, the memory 420 may include high-speed random-access memory, and may also include non-transitory memory, such as at least one magnetic disk storage device, flash memory device, or other non-volatile solid-state storage device. In some examples, the memory 420 may further include memories located remotely from the processor 410, and these remote memories may be connected to the device through a network. Examples of such networks include, but are not limited to, the Internet, an intranet, a local area network, a mobile communication network, and combinations thereof.

And, when the one or more programs included in the above device are executed by the one or more processors 410, the following operations are performed: receiving a first overheads frame in multiframe for FlexE overheads sent by a peer device; performing a check on a field of FlexE group number of the first overheads frame, where the field of FlexE group number includes: an interface capability flag, a SPN inner group number, and a check code; and in response to the check being passed, receiving overheads frames other than the first overheads frame in the multiframe for the FlexE overheads.

The device proposed in this embodiment and the method for receiving the multiframe for the FlexE overheads proposed in the above embodiment belong to the same inventive concept. For technical details not described in detail in this embodiment, reference may be made to any of the above embodiments, and this embodiment has the same beneficial effect as the implementation of the method for receiving the multiframe for the FlexE overheads.

Some embodiments of the present disclosure further provide a storage medium including a computer-executable instruction, where the computer-executable instruction is used to perform operations of a method for receiving multiframe for FlexE overheads when executed by a computer processor.

From the above description of the embodiments, those skilled in the art can understand that the present disclosure may be implemented by means of software and general hardware, and may also be implemented by hardware. Based on such understanding, the technical solution of the present disclosure may be embodied in a form of a software product, and the computer software product may be stored in a computer-readable storage medium, such as a floppy disk of a computer, a read-only memory (ROM), a random access memory (RAM), a flash memory (FLASH), a hard disk or an optical disk, etc., which includes multiple instructions to enable a computer device (which may be a personal computer, a server, or a network device, etc.) to perform the method described in any embodiment of the present disclosure.

The above descriptions are merely exemplary embodiments of the present disclosure, and are not intended to limit the protection scope of the present disclosure.

The block diagrams of any logic flow in the figures of the present disclosure may represent program operations, or may represent interconnected logic circuits, modules and functions, or may represent a combination of program operations and logic circuits, modules and functions. Computer programs may be stored on a memory. The memory may be any type suitable for the local technical environment and may be implemented using any suitable data storage technology such as, but not limited to, a read-only memory (ROM), a random access memory (RAM), an optical memory device and system (digital versatile discs (DVD) or compact discs (CD)) etc. Computer-readable medium may include non-transitory storage medium. The data processor may be of any type suitable for the local technical environment, such as, but not limited to, a general purpose computer, a special purpose computer, a microprocessor, a digital signal processor (DSP), an application specific integrated circuit (ASIC), a field programmable gate array (FGPA) and a processor based on a multi-core processor architecture.

The foregoing has provided a detailed description of exemplary embodiments of the present disclosure, by way of illustrative and non-limiting example. However, when considered in conjunction with the accompanying drawings and claims, various modifications and adjustments to the above embodiments will be apparent to those skilled in the art without departing from the scope of the present disclosure. Accordingly, the proper scope of the present disclosure will be determined with reference to the appended claims.

## Claims

1. A method for receiving multiframe for Flexible Ethernet, FlexE, overheads, comprising:
receiving a first overheads frame in the multiframe for the FlexE overheads sent by a peer device;
performing a check on a field of FlexE group number of the first overheads frame, wherein the field of FlexE group number comprises: an interface capability flag, a slicing packet network, SPN, inner group number, and a check code; and
in response to the check being passed, receiving overheads frames other than the first overheads frame in the multiframe for the FlexE overheads.

2. The method according to claim 1, wherein performing the check on the field of FlexE group number of the first overheads frame comprises:
in response to the field of FlexE group number of the first overheads frame complying with a predetermined generation rule, comparing the SPN inner group number with a preset group number of a local device; and
in response to the SPN inner group number matching the preset group number of the local device, determining that the check is passed;
wherein the predetermined generation rule comprises: the interface capability flag is a first flag and the check code is a corresponding value of the field of FlexE group number when the field of FlexE group number is correctly transmitted.

3. The method according to claim 1, further comprising:
in response to the interface capability flag being the first flag and the SPN inner group number not matching the preset group number of the local device, reporting a first alarm information, wherein the first alarm information comprises alarm information indicating that the SPN inner group number of the peer device does not match the preset group number of the local device; and
setting a remote physical layer fault flag of the first overheads frame in the multiframe for the FlexE overheads sent by the local device to the peer device to 1.

4. The method according to claim 1, further comprising:
in response to the interface capability flag being a second flag, denying establishment of a FlexE shim connection with the peer device;
reporting a second alarm information, wherein the second alarm information comprises alarm information indicating that an interface capability of the peer device does not match that of the local device; and
setting a remote physical layer fault flag of the first overheads frame in the multiframe for the FlexE overheads sent by the local device to the peer device to 1.

5. The method according to claim 4, further comprising:
exchanging management information with the peer device through a management channel.

6. The method according to any one of claims 1 to 5, wherein, before receiving the first overheads frame in the multiframe for the FlexE overheads sent by the peer device, the method further comprises:
generating the interface capability flag and the SPN inner group number, respectively, according to a capability type supported by an interface of a local device and planning information of internal group number, and calculating the check code; and
writing the interface capability flag, the SPN inner group number and the check code into the field of FlexE group number of the first overheads frame in the multiframe for the FlexE overheads sent to the peer device.

7. The method according to any one of claims 1 to 5, wherein the interface capability flag comprises a first flag and a second flag, and the first flag corresponds to a SPN capability; and
wherein the check code comprises a cyclic redundancy check code or a parity check code.

8. An apparatus for receiving multiframe for Flexible Ethernet, FlexE, overheads, comprising:
a first receiving module, configured to receive a first overheads frame in the multiframe for the FlexE overheads sent by a peer device;
a check module, configured to perform a check on a field of FlexE group number of the first overheads frame, wherein the field of FlexE group number comprises: an interface capability flag, a slicing packet network, SPN, inner group number, and a check code; and
a second receiving module, configured to receive, in response to the check being passed, overheads frames other than the first overheads frame in the multiframe for the FlexE overheads.

9. A device, comprising:
one or more processors; and
a memory for storing one or more programs;
wherein, the one or more programs, when executed by the one or more processors, causes the one or more processors to perform operations of the method for receiving multiframe for Flexible Ethernet overheads according to any one of claims 1 to 7.

10. A computer-readable storage medium storing a computer program that, when executed by a processor, causes the processor to perform operations of the method for receiving multiframe for Flexible Ethernet overheads according to any one of claims 1 to 7.
